(19) Europäisches Patentamt / European Patent Office / Office européen des brevets

(11) **EP 3 035 479 A1**

(12) **EUROPEAN PATENT APPLICATION**

(43) Date of publication:
**22.06.2016 Bulletin 2016/25**

(51) Int Cl.:
*H02J 3/38* (2006.01)   *H02J 13/00* (2006.01)

(21) Application number: **14199257.8**

(22) Date of filing: **19.12.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Technische Universität Wien
1040 Wien (AT)**

(72) Inventor: **Ilo, Albana
3021 Pressbaum (AT)**

(74) Representative: **Weiser, Andreas
Patentanwalt
Kopfgasse 7
1130 Wien (AT)**

(54) **Method for controlling a power grid**

(57)     A method for controlling a power grid with a first link element, the first link element (1) having at least one link node (BLiN) for coupling to at least one second link element (1) similar to the first link element (1) and having at least one of one or more producer nodes (BPN), load nodes (BLoN), and storage nodes (BSN), comprising, in the first link element (1),
receiving a first demand value at the link node (BLiN);
calculating a set point based on the first demand value for each of said at least one producer nodes (BPN), load nodes (BLoN), and storage nodes (BSN) of the first link element (1);
determining a difference between the first demand value and an actual value which is reached upon applying the set points to said at least one producer nodes (BPN), load nodes (BLoN), and storage nodes (BSN) of the first link element (1);
if the determined difference is above a threshold, sending a percentage of the determined difference as a second demand value to the least one second link element (1).

The invention further relates to a link element and a power grid.

*Fig. 3a*

## Description

### Field of the Invention

The present invention relates to a method for controlling a power grid. The invention further relates to a novel encapsulated element for a power grid, here called "link element", and a power grid comprising such link elements.

### Background of the Invention

The integration of renewable energy sources (RES) and the distributed generation (DG) as well as progresses in smart meters and information and communication technology (ICT) create new circumstances and challenges on the electricity power industry. Electric power systems are not only the biggest systems that mankind has ever designed but also the most secured one. Their relatively closed environment has protected them from sabotage and other hostile purposes. But usage of contemporary technologies to modernize power systems create serious security leaks. Cyber-security issues need to be treated in the initial design stages of an upgraded power system architecture.

Different proposed frameworks to resolve these issues are presented in the following. A basic cell controller architecture described in P. Lund, "The Danish cell project - Part 1: Background and general approach", presented at IEEE, Power Engineering Society General Meeting, Tampa, Fl, USA, Jun. 24-28, 2007, has a layered control hierarchy by using distributed agent technology and high speed fiber network. There are defined three control modules: local, regional and enterprise, as shown in *S. Cherian, B. Keogh, O. Pacific,* "Dynamic distributed power grid control system", WO 2012/008979 A1, Jan. 19, 2012. The number of data exchanged is tremendous.

Similarly, an ultra large power system control architecture is presented in J. Taft, P.D. Martini, "Ultra Large-Scale Power System Control Architecture; A Strategic Framework for Integrating Advanced Grid Functionality", Cisco Website, October 2012. Therein, a central multiple level control framework is accompanied by a concept of vertical and horizontal distributed intelligence.

In K. Moslehi, R. Kumar, "A Reliability Perspective of the Smart grid", IEEE transactions on Smart grid, vol. 1, no. 1, pp. 57-64, June 2010, a hierarchical architecture for smart grids is disclosed, which is based on seven major components like grids, regions, control areas, transmission substations, distribution substations, feeders, and consumers' components. Each of them have specialized agents that operate at different time scales according to the physical phenomena of the power grid.

A prosumer (producer-consumer)-based layered architecture, presented in S. Grijalva, M. U. Tariq, "Prosumer-based smart grid architecture enables a flat, sustainable electricity industry", ISGT Conference, Anaheim, CA, USA, 17 - 19 January 2011, has the prosumer as a major component, consisting of a combination of components like energy sources, loads, storages, and an electric grid. This architecture enables a "flat" paradigm across the industry. A web-based service oriented architecture is proposed, although it has some disadvantages in security and reliability.

Security technologies for a smart grid system are discussed in A. R. Metke, R. L. Ekl, "Security Technology for Smart grid Network", IEEE transactions on Smart grid, vol. 1, no. 1, pp. 99-107, June 2010, wherein public key infrastructure technology elements based on industry standards and trusted elements are presented as a suitable solution. The "Smart Grid Architecture Model" presented in CEN-CENELEC-ETSI Smart grid Coordination Group, "Smart grid Reference Architecture", EU Commission homepage [Online], 2012 November, has six hierarchical levels, or zones, and five domains. The zones are: process, field, station, operation, enterprise, and market; while the domains are: generation, transmission, distribution, and customer premises. A meta-model concept is used for the description of functional architectures for smart grids.

A short overview of the "The Energy Supply Chain Net" overall mode is presented in A. Ilo, "The Energy Supply Chain Net", Energy and Power Engineering, [Online], Volume 5 (4), pp. 384-390, July 2013, which has created some basis for a distributed link-based architecture.

All of the above-mentioned cell-based power grid controls have the disadvantage that they still need a complex regulation between the proposed cells, i.e., the control within cells and the control between cells is disjointed. The number of data to be exchanged is very big and cannot be mastered with conventional communication technologies. The usage of contemporary communication and information technologies creates serious security leaks. The methods have a very high abstraction level and are hardly applicable in large scale. Last but not least, there is still a need to ease an implementation of prosumer-based complexes into power grids.

### Object of the invention

It is an object of the invention to provide improved methods and apparatus which overcome the above-mentioned drawbacks of the state of the art.

## Summary of the Invention

In a first aspect, the invention provides for a method for controlling a power grid with a first link element, the first link element having at least one link node for coupling to at least one second link element similar to the first link element and having at least one of one or more producer nodes, load nodes, and storage nodes, comprising,
in the first link element,
receiving a first demand value at the link node;
calculating a set point based on the first demand value for each of said at least one producer nodes, load nodes, and storage nodes of the first link element;
determining a difference between the first demand value and an actual value which is reached upon applying the set points to said at least one producer nodes, load nodes, and storage nodes of the first link element;
if the determined difference is above a threshold, sending a percentage of the determined difference as a second demand value to the least one second link element.

In a second aspect, the invention provides for a link element for a power grid, the link element comprising
at least one link node for coupling to at least one second link element similar to the link element,
at least one of one or more producer nodes, load nodes, and storage nodes,
a processor coupled to said nodes and being configured to
receive a first demand value at the link node;
calculate a set point based on the first demand value for each of said at least one producer nodes, load nodes, and storage nodes of the link element;
determine a difference between the first demand value and an actual value which is reached upon applying the set points to said at least one producer nodes, load nodes, and storage nodes of the link element;
if the determined difference is above a threshold, send a percentage of the determined difference as a second demand value to the least one further link element.

The invention is based on a new concept of entirely encapsulated "link elements", or "links", which are only accessible through clearly defined interfaces. Using the above-stated method, each link can be viewed as a closed black box, which passes on demand values for scheduled or unscheduled demands which cannot be met within this black box. Since only well-defined values are to be exchanged, cyber-security is improved while the incorporation of new link elements into the power grid is eased. Thus, prosumer-based link elements can be connected to link nodes of said link element and thereby an easy incorporation of small consumer-based power plants into the power grid is provided.

The invention provides an upgrade of the traditional power system architecture, which is particularly useful for integrating renewable energy resources and distributed generators. A new technical-functional architecture of power systems is thus designed, which can take into account modern electricity market rules and rigorous cyber-security and privacy requirements.

The inventive concept is based on the overall power system model that stretches from high to low voltage including customer plants. The generic base element of it is the "link element", or "link", in the following. A distributed link-based architecture is designed, wherein each link is modular and cohesive. This architecture enables a "flat" paradigm across the industry and minimizes the number of data which need to be exchanged. The invention is based on novel interfaces for link-link, link-power plant, and link-storage connections.

The invention is based on a novel architectural framework which needs only one base component - the link. The link is generic and cohesive, and it can be used consistently over the entire grid including the customer plant. By means of this, rigorous cyber-security and privacy requirements and market accommodation can be met. The number of data exchanged for the reliable operation of the link is minimized.

Preferably, said actual value is a calculated value which could be reached if the set points were applied to said at least one producer nodes, load nodes, and storage nodes of the first link element. This has the advantage that the application of the set points is only performed after it has been made sure that the demand value can actually be reached by passing on a percentage of the demand value to other power grids.

In a preferred embodiment, the set points are applied to the generator nodes, load nodes, and storage nodes of the first link element after determining said difference. In this way, the set points can be re-adjusted with respect to the determined difference.

In an alternative embodiment, said actual value is a measured value which is reached after the set points have been applied to said at least one producer nodes, load nodes, and storage nodes of the first link element. This eases the determination of the difference and saves time, since the step of determining the difference based on a theoretical application of the set points can be omitted.

Preferably, the method comprises, after determining the difference,
sending a request from the first link element via the link node to at least one second link element,
receiving a response value from said second link element via the link node, and
calculating said percentage on the basis of said response value.

Thus, a send and request scheme can be employed before the percentage is calculated. The request can itself contain the determined difference or a fraction thereof, e.g., the fraction being the number of second/further link elements the request is sent to.

Preferably, at least one of the first and second demand values is accompanied by a at least one of a duration and a starting time. Thus, for example, day-ahead or next-hour schedules can be employed.

In a further preferred embodiment, the values exchanged via the link node are at least one of the following: an active power, a reactive power, a voltage, a power factor, a static and/or dynamic load characteristic, an active current, a reactive current, dynamic equivalent generator parameters, equivalent static exciter parameters, equivalent turbine parameters. This ensures an efficient and sufficient communication between two link elements. With respect to cyber-security, only a minimal number of data is transferred, such that a private environment of the link elements is ensured. For the same reasons, the values exchanged via one of said producer nodes, load nodes, and storage nodes are at least one of the following: an active power, a reactive power, a voltage, a power factor, a static and/or dynamic load characteristic.

According to a further aspect of the invention, there is provided a power grid comprising generators, loads, and storages, and at least two link elements coupled via their link nodes, each link element being coupled via one of its producer nodes, load nodes, and storage nodes to one of the generators, loads, and storages. Thus, a self-regulating power grid can be achieved by linking the link elements according to the invention.

Preferably, the power grid has at least three link elements, wherein each generator, load and storage coupled to the first link element operates on a high voltage level, each generator, load and storage coupled to the second link element operates on a medium voltage level, and each generator, load and storage coupled to the third link element operates on a low voltage level. Because of the standardised structure of the link elements, the proposed concept can be applied to any partition of the power grid, may it be within a subset of a high voltage grid, a medium voltage grid, a low voltage grid, or simply a customer power plant.

**Brief Description of the Drawings**

The invention shall now be explained in more detail below on the basis of preferred exemplary embodiments thereof with reference to the accompanying drawings, in which:

Fig. 1 shows a power grid in a schematic view;
Fig. 2 shows a further power grid in a further schematic view;
Figs. 3a and 3b show a general link element (or "link") according to the invention.
Figs. 4a, 4b, 5a, 5b, 6a, 6b, 7a and 7b show embodiments of the link element of Fig. 3a and 3b;
Figs. 8a, 8b and 8c show operating schemes of a power grid according to the invention;
Fig. 9 shows a method for controlling a power grid according to the invention in a schematic block-diagram;
Fig. 10a shows a further method for controlling a power grid according to the invention in a schematic block-diagram; and
Fig. 10b shows a link element as used in the method of Fig. 10a.

**Detailed Description**

A. Overview

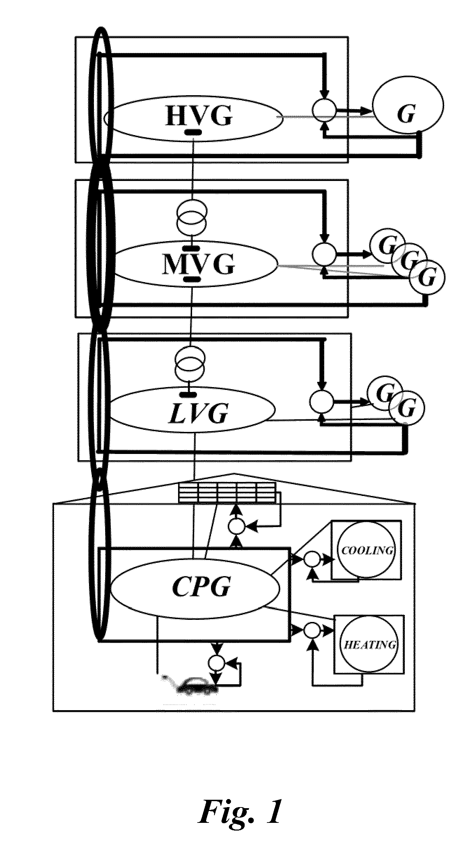

With regard to network operation and construction characteristics, Fig. 1 shows an electric power grid divided into parts: transmission (high voltage grid, HVG) and distribution, which comprises the medium voltage grid (MVG) and the low voltage grid (LVG). Also each customer plant has its own grid (CPG) to directly supply the loads. Within the power system, only the HVG is fully monitored as well as automatically regulated and controlled by means of the primary, secondary, and sometimes tertiary control implemented for both major quantities of power systems, i.e., frequency and voltage. Fig. 1 thus shows an overview of the power grid according to the "Energy Supply Chain Net Model" discussed at the outset by means of an incorporated customer plant CPG. HVG, MVG, LVG, and CPG are presented through ellipse plots. The primary and secondary control loop is represented with lines, while the respective control area for the secondary control is represented through surface areas of the rectangles. Each of the grid parts has the same control scheme. This means that MVG, LVG, and CPG (by means of Smart Grids) are also designed to have primary and secondary control for both major quantities frequency and voltage. Thus, the power system is conceived as an "Energy Supply Chain Net" with each grid (HVG/MVG/LVG and CPG) being considered as a "link" (see below) of its own. The heart of this model involves the following core principle: HVG, MVG, LVG, and CPG are managing themselves and react flexible with each other like the links in a chain net. This means that each individual link or a link-bundle member operates independently, having contractual arrangements with other relevant boundary links or link-bundles and suppliers, which inject directly into their own grids. Consequently, it can be said that links are modular and cohesive.

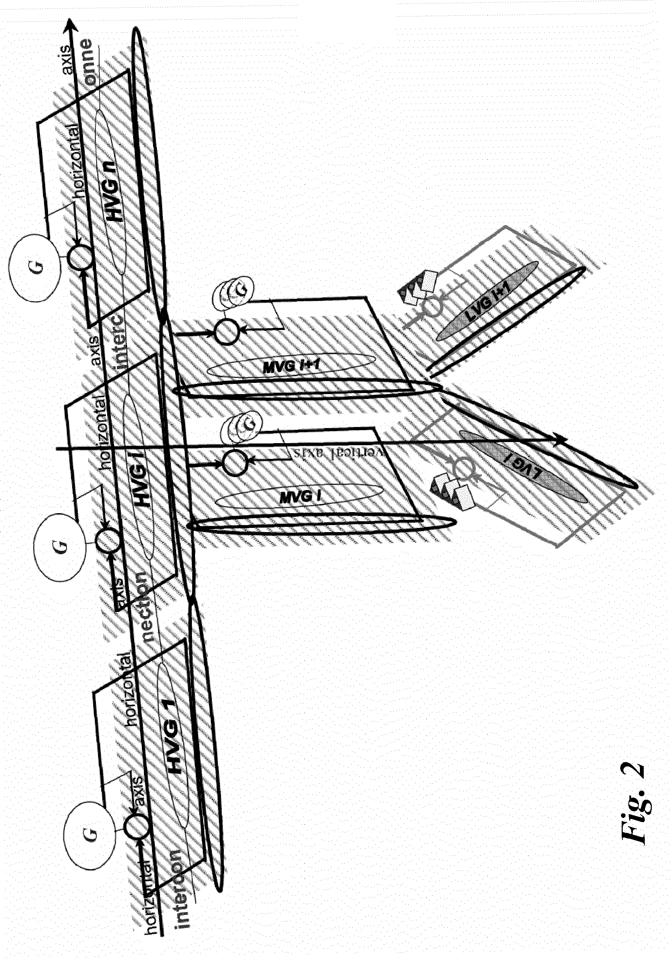

Fig. 2 shows an overview of the interconnected power grid from the perspective of the "Energy Supply Chain Net" model. Two axes may be distinguished: the horizontal and the vertical axis. In the horizontal axis HVG areas are located, which are already connected, i.e., linked with each other via interconnections, and build up a flexible connection with each other. The flow in the interconnection is neither automated nor coordinated from the technical point of view. Instead, the flow schedules are primarily established for economic reasons. In the vertical axis MVG, LVG and CPG are classified, which are connected on a particular point of the corresponding HVG.

Investigations have shown that, besides the Transmission System Operator (TSO) and Division System Operator (DSO), a new operator named Low Voltage System Operator (LVSO) is useful when home automations and their integration on the grid are well established. Besides the technical targets, the mission of each actor will be to facilitate effective and well-functioning retail markets. The "Energy Supply Chain Net" model enables the presence of different market actors, may they be TSOs, DSOs, LVSO, big and/or small suppliers and prosumers.

The "Energy Supply Chain Net" model minimizes the number of the data that should be exchanged. Additionally, by including in itself the link structure proposed herein, this model guarantees the privacy, security and availability of the data, and the information from the beginning.

The "Energy Supply Chain Net" is an approach to model objectives and functions of complex power system processes, which involves interactions between the power flows, the information, and the market. The basic components of this approach are the link 1, the producer complex 2, and the storage complex 3, which are detailed in the following.

B. <u>The link or link element</u>

The link element 1, or "link" in short, is defined as a composition of a grid part, called link-grid, with a corresponding secondary control and some link interfaces. The link-grid size is variable and is defined from the area, where the link secondary control is set up. This means that the link-grid may include, e.g., one subsystem (the supplying transformer and the feeders supplied from it) or a part of the sub-transmission network, as long as the secondary control is set up on the respective area.

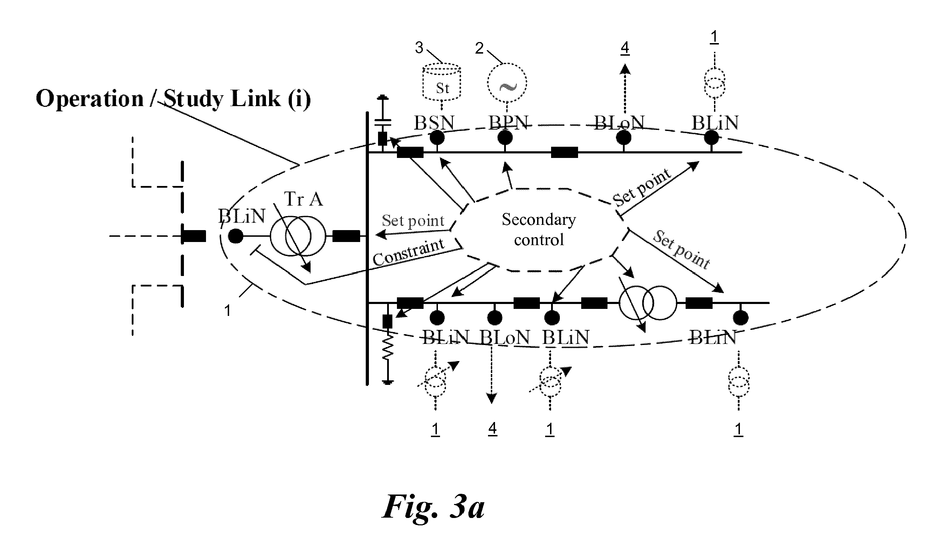

Fig. 3a shows an example of the link 1. The term link-grid refers to electrical equipment like lines/cables, transformers and reactive power devices, which are connected directly to each other by forming an electrical unity. Each link 1 has a number of boundary nodes through which it is connected with other neighbor links (Boundary link Node, BLiN), power plants injecting directly into it (Boundary Generation Node, BGN), storage units connected directly to the link-grid (Boundary storage Node, BSN), and loads supplied from it (Boundary Load Node, BLoN).

The link 1 has a secondary control for both major entities of power systems, i.e., frequency and voltage. Its algorithm fulfils technical issues and calculates the set points for its own components and components connected thereto by respecting the dynamic constraints that are necessary to enable a stable operation. The link's own facilities, transformers, and reactive power devices can be upgraded with primary/locally control. Thus, the secondary control can send set points to own facilities and to all entities connected at the boundary nodes.

C. <u>The producer complex</u>

The producer complex 2 is a composition of an electricity production facility (may it be a generator, photovoltaic module, etc.), its primary control, and the producer interface.

D. <u>The storage complex</u>

The storage complex 3 is a composition of a storage facility (may it be a generator of a pump power plant, batteries, etc.), its primary control, and the storage interface.

E. <u>Link types</u>

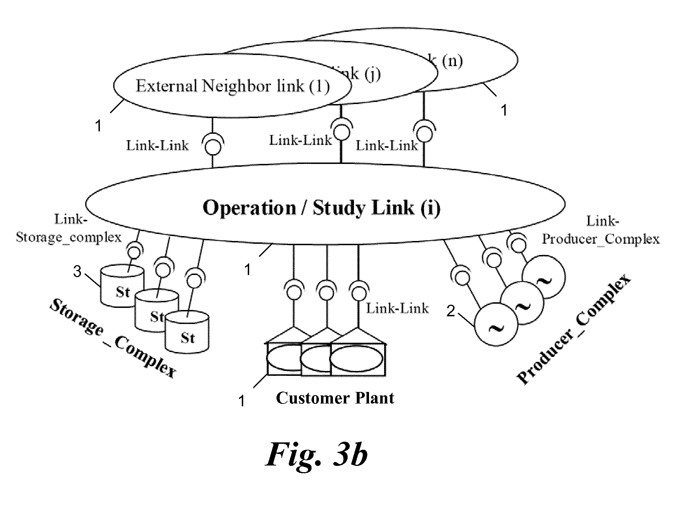

Data privacy and big data transfer are the two biggest challenges that smart grid technologies are facing today. To overcome these two challenges, i.e., to guarantee data privacy and to minimize the number of relevant data to be exchanged, the following distributed link-based architecture is proposed. The key principle of this design is to prohibit access to all resources by default, allowing access only through well defined boundary points, i.e., interfaces of the link 1. Fig. 3b shows the interfaces of a link 1. As mentioned above, the link 1 has a number of boundary nodes which are connected links 1, producer complexes 2, storage complexes 3, and loads 4. They are normally electrically connected with the relevant link 1 via switches (circuit breakers, switches or fuses). But, to ensure a stable and reliable operation of the link, the power flow exchange at the boundary points and the neighbor's behaviour in contingency and emergency cases should be known at every moment. For that reason, three types of interfaces are defined as follows: link-link, link-storage complex and link-producer complex. When a link 1 needs to connect to another link 1 or other electrical components 2, 3, 4 in order to function, it uses the appropriate interface. To create a clear understanding of the link 1, link types and the interfaces are discussed in the following.

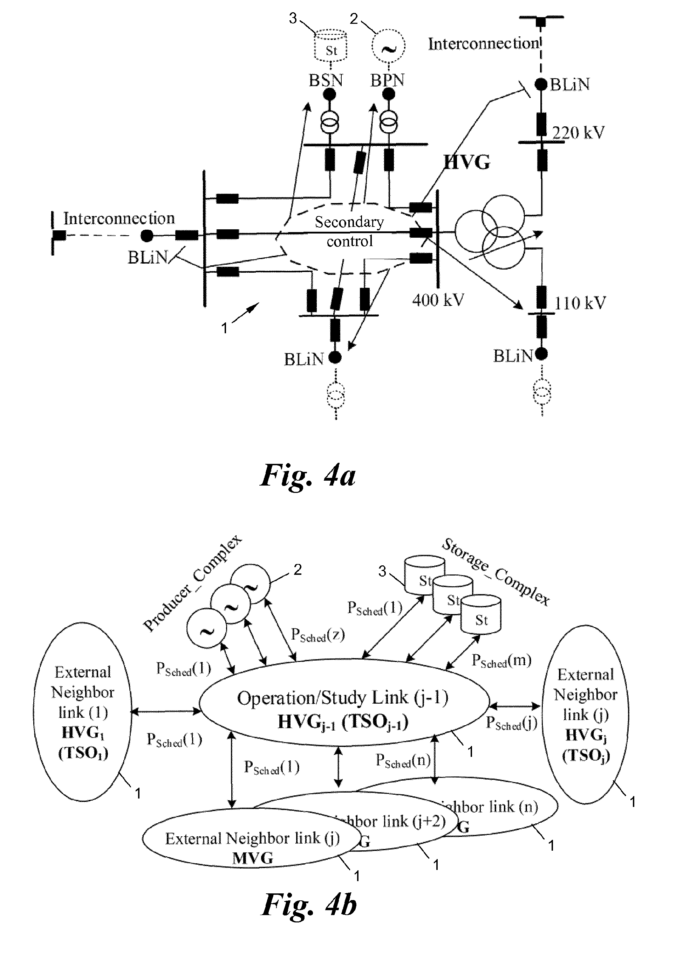

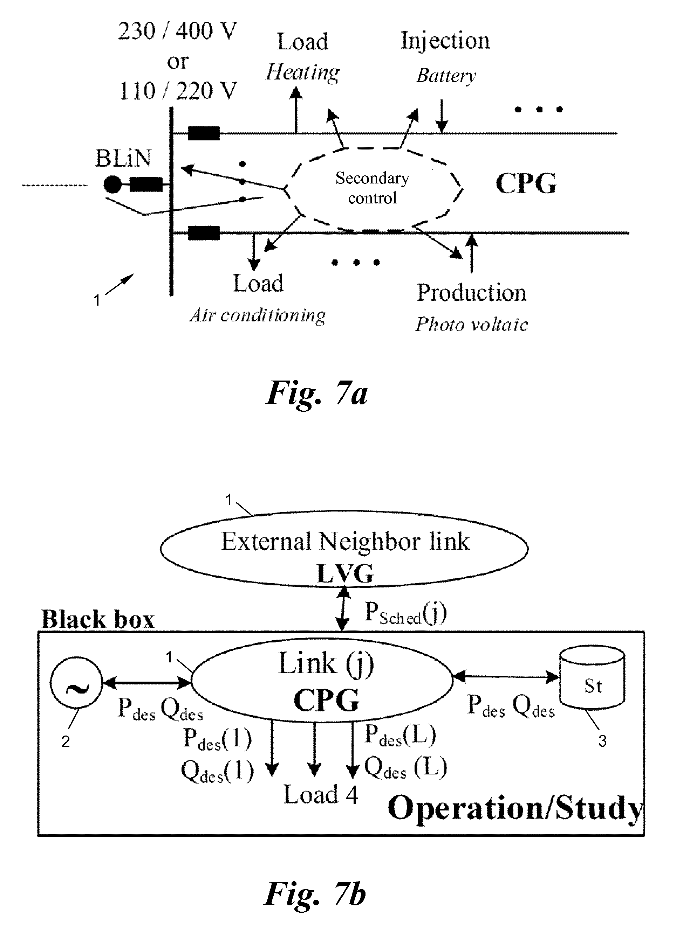

There are four different link types: HV-link, MV- link, LV-link, and CP-link, depending on the link-grid type HVG, MVG, LVG, or CPG. Figs. 4a - 7a and Figs. 4b - 7b show a link-grid overview and the corresponding entities, respectively, that should be exchanged in normal operation conditions for different link types: HV-link, MV-link, LV-link, and CP-link:

*E.1 HV-link*

The HV-link 1 is meshed and upgraded with real-time measurements, Figs. 3a and 3b. The neighbors of this link 1 are other HV-links and MV-links, generators and storages. The relevant interfaces are link-link, link-generator, and link-storage. The secondary control area may be the same as the still existing TSO control area. Especially for the European network type, also the sub transmission network part (almost 110 kV) can create an own link-grid of the type HV.

*E.2 MV-link*

The MV-link 1 is normally radial with very few real-time measurements, see Figs. 4a and 4b. The MV-link 1 has one intersection point with the HV-link-grid over the HV/MV transformer. Normally, its secondary control area includes only one subsystem, which means only one part of the DSO control area. Since the topology is updated in SCADA (supervisory control and data acquisition - commands at the appropriate time manually updated), the secondary control area is dynamically changed and in the given case two links 1 will be automatically merged to one.

*E.3 LV-link*

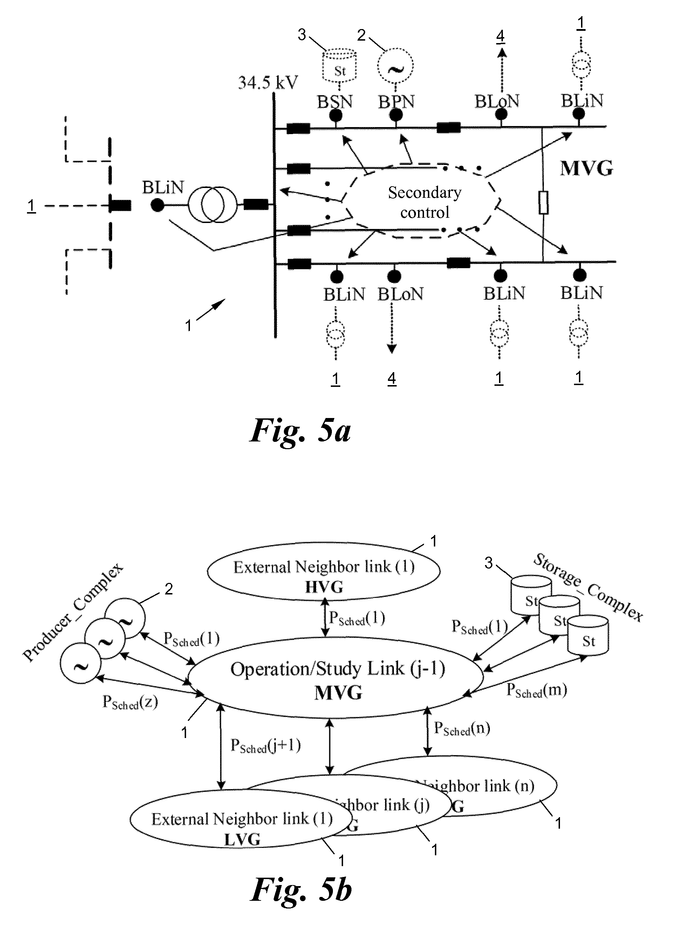

The LV-link 1 is normally radial and in the case of smart meters, and it rolls out with a very big number of measurements, see Fig. 5a and 5b. The LV-link 1 has one intersection point with the MV-link-grid over a distribution transformer. Normally its secondary control area includes only one subsystem, i.e., only one part of the DSO control area. The topology in SCADA can be updated manually and consequently the secondary control area will be dynamically changed, and in the given case two links will be automatically merged to one.

*E.4 CP-link*

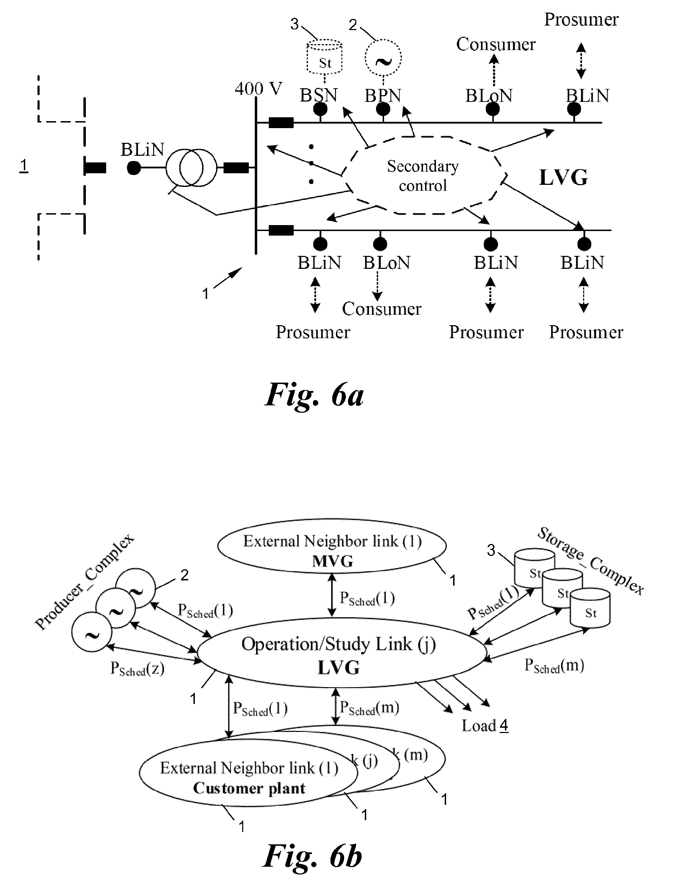

The CP-link 1 is a pure black box with secondary control over the customer plant equipment, which can reach an energetic, economic optimum by fulfilling the agreements/requirements with the LV-links, see Figs. 6a and 6b. Different to the other link types, this link 1 is not under the administration of utilities, but of the customer, i.e., of the house lord.

Each link 1 or link-bundle operator is aware of the electricity producing capacity of the facilities feeding into its own grid and its limitations. It conceives the topology with respect to the power producers and consumers and its own ability to distribute the electricity. The link 1 knows the control response of each of the electricity producers and can issue sequences to meet the dynamic needs of the area. To ensure a feasible, reliable, and resilient operation, the relevant information should be exchanged through the interfaces with the neighboring links 1, the energy producer, storage facilities, and even the customer plants.

F. Link interfaces

With the information that will be exchanged via these interfaces, it is possible for each link 1 to perform an operation with (n-1) security, to balance the active power, to calculate the angular and voltage stability, to optimize the operation, to define effective shedding schemas, to keep the primary, secondary and tertiary reserve reliable, and to facilitate the demand response. In Table 1, the relevant electrical entities of the interface for all three types of interfaces link-link, link-producer and link-storage are shown.

ELECTRICAL ENTITIES FOR DIFFERENT LINK INTERFACE TYPES

| Electrical entities to be exchanged (*) | | Link-Link | Link-Producer_Complex (**) | Link-Storage_Complex |
|---|---|---|---|---|
| Very fast | $V_{meas}$, $\delta_{meas}$ | √ | | |
| | $P_{meas}$, $Q_{meas}$ | √ | √ | √ |
| | $P_{set\_point}$, $Q_{set\_point}$ | √ | √ | √ |
| Fast | $P_{des}\pm\Delta P$, $Q_{des}\pm\Delta Q$<br>Delivered time<br><br>Time interval | √ | √ | √ |
| | $P_{des}^{nexthour}\pm\Delta P$<br>$Q_{des}^{nexthour}\pm\Delta Q$ | √ | √ | √ |
| Slow | $P_{Schedule}^{dayahead}\pm\Delta P$<br>$Q_{Schedule}^{dayahead}\pm\Delta Q$ | √ | √ | √ |
| | Static and dynamic (lumped) load characteristic $k_{PV}$, $k_{QV}$, $k_{Pf}$, $k_{Qf}$ ... | √ | | √ |
| | $I_{equiv}$, $Z_{equiv}$ | √ | | |
| | Dynamic equivalent Generator parameters like $x_d$, $x_q$, $x_l$, $x'_d$, $x'_q$, $x''_d$, $x''_q$, $T'_{d0}$, $T'_{q0}$, $T''_{d0}$, $T''_{q0}$, ... | √ | (***) | |
| | Equivalent voltage regulator, static exciter parameters like $K_A$, $T_A$, $T_R$, $K_S$, $v_{max}$, ... | √ | (***) | |
| | Equivalent governors, turbine parameters like $K_1$, $T_{G1}$, $R_{MAX}$, ... | √ | (***) | |
| | Schedule for demand response capability | √ | | √ |
| | Reserves schedule (secondary, tertiary) | √ | √ | √ |

\* data related to the boundary node

\*\* P and Q can have only one sign. Producers only inject power on the grid

\*\*\* static data should not be exchanged via interface

Table 1

F.1 The link-link interface

The link-link interface is the most extensive one. To perform load production balance, the day-ahead schedule $P^{dayahead}_{Schedule} \pm \Delta P$ and next-hour schedule $P^{nexthour}_{des} \pm \Delta P$ are exchanged. ΔP is the active power capacity support (spinning reserve) that each link 1 provides during contingency. Conditions can additionally be exchanged to enable (n-1) security calculations. In this case, also the available reactive power resources $Q^{dayahead}_{Schedule} \pm \Delta Q$ and $Q^{nexthour}_{des} \pm \Delta Q$ should be known. To perform angular and voltage stability calculations, the dynamic data for the dynamic equivalent generator and the equivalent exciter, voltage regulator, turbine and the governor can be calculated on real-time and exchanged between the links 1. Links 1 can also offer services to each other by means of secondary and tertiary reserve. Demand response is the most pressing issue nowadays and the request for a load-decrease or a load-increase is included in the interface in form of schedule and desired instantaneous value, i.e., $P_{des} \pm \Delta P$ and/or $Q_{des} \pm \Delta Q$. In chapter H., a concrete application of the link 1 for resolving a use case to perform demand-response balancing is given. Depending on the link types involved, it can be distinguished between HV-link - HV-link interface; HV-link - HV-link interface, MV-link - LV-link interface, MV- and LV-link - CP-link interface.

*HV-link - HV-link interface*

The HV-link - HV-link interface is the typical interaction between two TSO areas. One of the crucial functions of HV or rather HV-links is the balance load production in real-time, which is normally realized via the Automatic Generation control (AGC). The HV-link 1 is the grid included on the AGC controlling area. AGC is the HV-link secondary control, although this is defined only for the real power in commercial bases, while on the "Energy Supply Chain Net" model it is foreseen to be upgraded with technical objectives. One aspect of AGC is to supply the scheduled interchange obligations to other interconnected utilities or rather neighboring HV-links. The HV-link can be upgraded with a Volt/var secondary control.

*HV-link - MV-link interface*

The HV-link - MV-link interface is the typical interaction between the HVG and MVG, realized technically through the HV/MV supplying transformer. Up to now, from the point of view of the HVG, i.e., HV-link-grid, the MVG, i.e., MV-link-grid, was modelled using a lumped feeder load. In presence of the DGs and the bi-directional fluxes at the supplying transformer level, this kind of modelling is not suitable anymore. All entities defined for the link-link interface can now be exchanged to ensure the coexistence of the two link types. The existing HV-link secondary control for the frequency and/or real power can be extended with the exchange over the supplying transformers and can send the set points $P_{\text{set-point}}$ calculated in real-time. These set points can be treated as dynamic constraints from the MV-link secondary control. The information exchange is described under point H. by means of a power system posturing process. The same scheme can be also used for the voltage and/or reactive power entities.

*MV-link - LV-link interface*

The MV-link - LV-link interface is the typical interaction between the MVG and LVG, realized technically through the MV/LV distribution transformer. Up to now, from the point of view of the MVG, i.e., MV-link-grid, the LVG, i.e., LV-link-grid, was modelled using the lumped feeder load. Similar to the case described above, also here, in presence of the DGs and the bi- directional fluxes on the distribution transformer level, this kind of modelling is not suitable any more. Also, the MV-link secondary control will send the $P_{\text{set-point}}$ and $Q_{\text{set-point}}$ to the MV-link secondary control, which treats them as constraints. Here, the service restoration is more relevant than the (n-1) security calculation. ΔP and ΔQ will be used for restoration purposes. With the increasing share of the DGs, also the dynamic link behaviour is relevant and can be calculated for each link type. As a result, the complete set of the link-link interface defined in Table 1 is also here relevant.

*LV-link- CP-link interface*

The LV-link - CP-link interface is the typical interaction between the LVG, i.e., LV-link-grid, and the house. The link 1 is modular, cohesive, and closed in itself, thus fulfilling data privacy conditions. Differently to the state of the art, where certain household appliances are turned on by network operators and energy suppliers, in the disclosed architecture the house is a black box. The network operator can interact with houses through the interface, which gives information only about their exchange and their needs ($P_{des} \pm \Delta P$, $Q_{des} \pm \Delta Q$). No information over the household appliances that are currently in operation is accessible from the outside by the grid operator or the energy supplier. The household may realize the controlling of the house appliances by using internet and so on, but the communication with the grid will be realized only safely, thus protecting the power delivery systems from the cyber-attacks. The LV-link can send the negotiated set points $P_{set-point}$, $Q_{set-point}$ to the CP-link. The real-time exchange with the grid can be supervised by the CP-link secondary control. The daily and hourly P and Q schedules may be generated by a powerful Home Management Unit. All entities for the link-link interface defined in Table 1 can also be used for this link combination, and step-voltage regulators can be installed in LV and CP levels.

F.2 The link-producer interface

The link-producer interface is the typical interaction between the TSOs and the power supplier. This kind of interface is can be established at transmission level, i.e., between the HV-link-grid and the electricity producer injecting through step-up transformers in the HVG. The same interface can also be used for the interaction between MV- and LV-link producer. This kind of interface is not relevant for the CP-link because the CP-link-grid and the home electricity producer have the same owner.

F.3 The link-storage interface

The link-storage interface is the typical interaction, for example, between the TSOs and the pumped hydro storage power plants. Up to now, the storage was treated as a part of the generation power plants, because they were not more prevalent. But with the new development, the number of storage units is increasing continuously. From the grid point of view they behave identically: they store energy during off-peak times and then release on request. The entities defined in Table 1 are sufficient to support this behaviour and are relevant for all link types HV-, MV-, and LV-link. This kind of interface is not relevant for the CP-link because the CP-link-grid and the home electricity storage units, potentially batteries of electrical cars, have the same owner.

G. The link operation

In the "Energy Supply Chain Net" model an own operator is foreseen for each link or link-bundle type. CP-link is a special one, because the owner is the House Lord, who normally isn't aware of it. For that reason, a reliable active operation of this link type can be realized if it is fully automated.

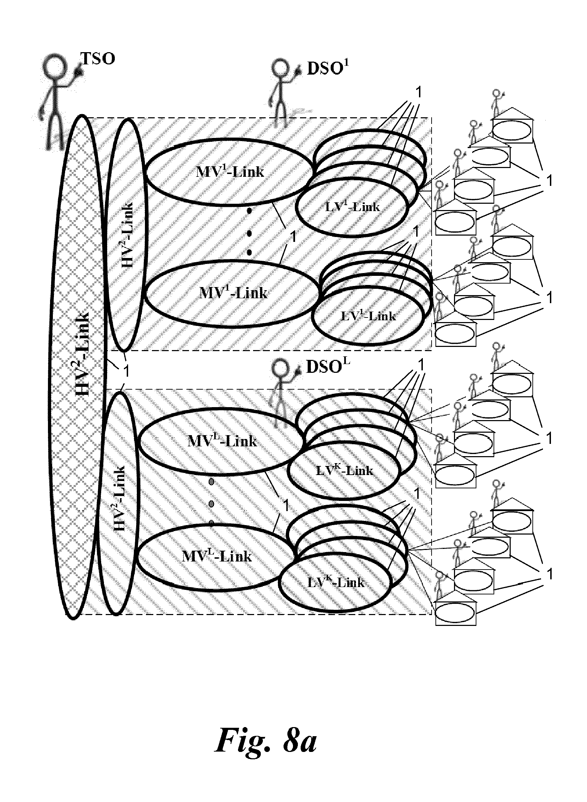

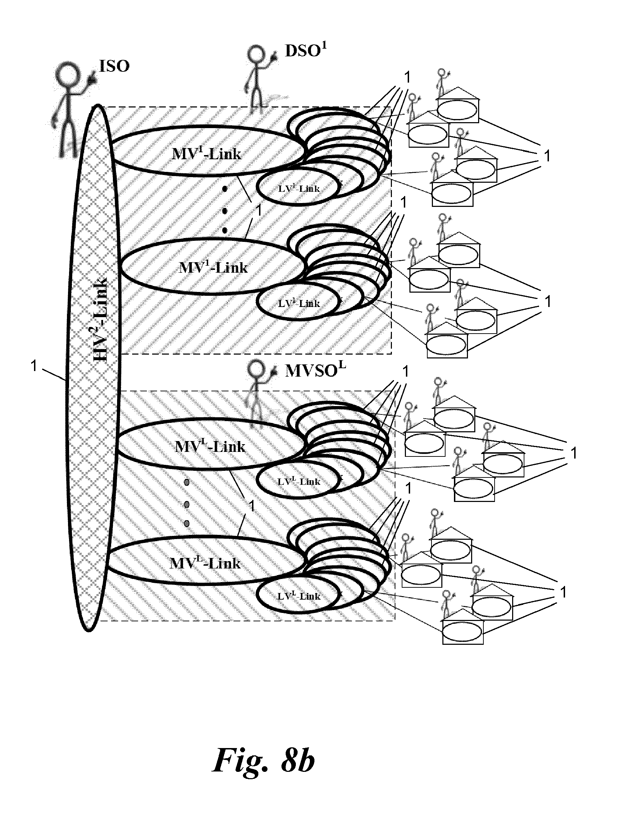

Figs. 8a - 8c show the composition of the system / link operators for different link and grid types. Actually, there exist two types of systems operators: The TSO and Independent Systems Operator (ISO) for the European (Fig. 8a) and North American grid (Fig. 8b), respectively, who are responsible for the transmission grid. Differently to the TSOs in Europe, ISOs in North America are also responsible for the sub-transmission grid, and The DSO is responsible for the distribution network. The DSOs in North America are responsible for the primary and secondary grid, while the DSOs in Europe are normally responsible for the sub-transmission grid, the medium voltage grid, and low voltage grid.

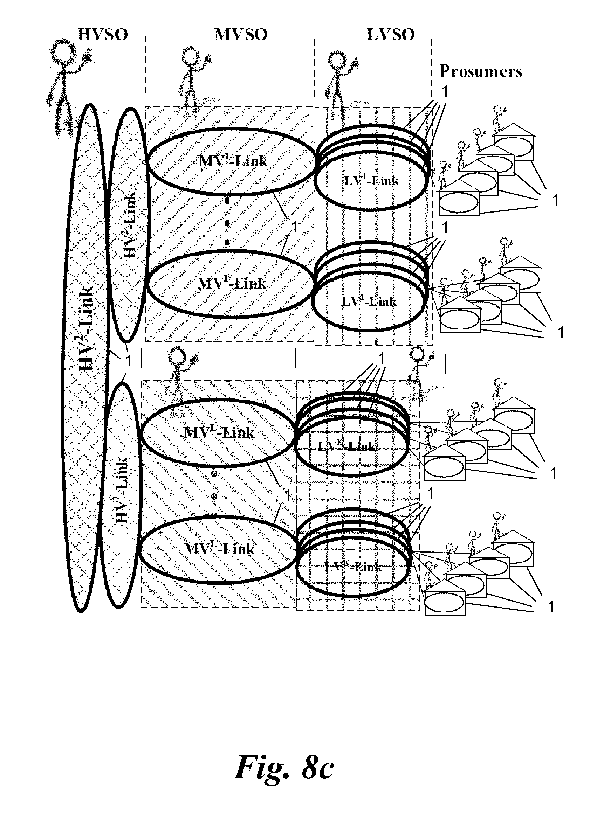

Figs. 8a and 8b show the operating areas defined by the "Energy Supply Chain Net" model by maintaining the existing structures. In the European type, the TSO is responsible for the HV-link, while the DSO is responsible for the conglomerate of the link types as follows: HV-, MV-, and LV-link types, Fig. 8a. In the North American type, the ISO is responsible for the HV-link, while the DSO is responsible for the MV- and LV-link type, Fig. 8b. Fig. 8c shows the proposed structure in the context of the "Energy Supply Chain Net" model, which provides the unbundling of the distribution operation on the operation of medium/primary and low/secondary grid, i.e., the MV- and LV-link-operation. In this case, the power grid will be operated by three types of operators: High-, Medium-, and Low Voltage System Operators (HVSO, MVSO, and LVSO) which are responsible for the HV-link, MV-link, and LV-link respectively.
Each link or link-bundle operator, may it be HVSO, MVSO, or LVSO, including even the House Lord (more exactly the Home Automation Unit), can:

- balance the load and the injection in real-time, where the load represents the summation of the system's native load and the scheduled exchange to other links, while the injection represents the summation of the generation, the injection from storage devices, and the scheduled exchange to other links;
- actively manage its link or the link-bundle;
- monitor its link-grid or the bundle of link-grid;
- access all the data of the link;
- exchange the data with the neighbor links and all devices connected directly to the own link-grid or to the bundle of link-grid;
- have the right to use and offer services to the neighbors;

- have the right to dispute with the neighbors to guarantee a reliable and stable operation of his own link-grid;
- decide the actions should be taken for an secure and optimal operation of the own link or link-bundle;
- be incentivized to invest in adequate solutions, beyond physical reinforcements to increase the flexibility of the link; and
- to facilitate effective and well-functioning retail markets.

## H. Power system posturing processes

The functionality of the method is demonstrated by means of two power systems posturing processes: demand response and dynamic security process.

### H.1 Demand response

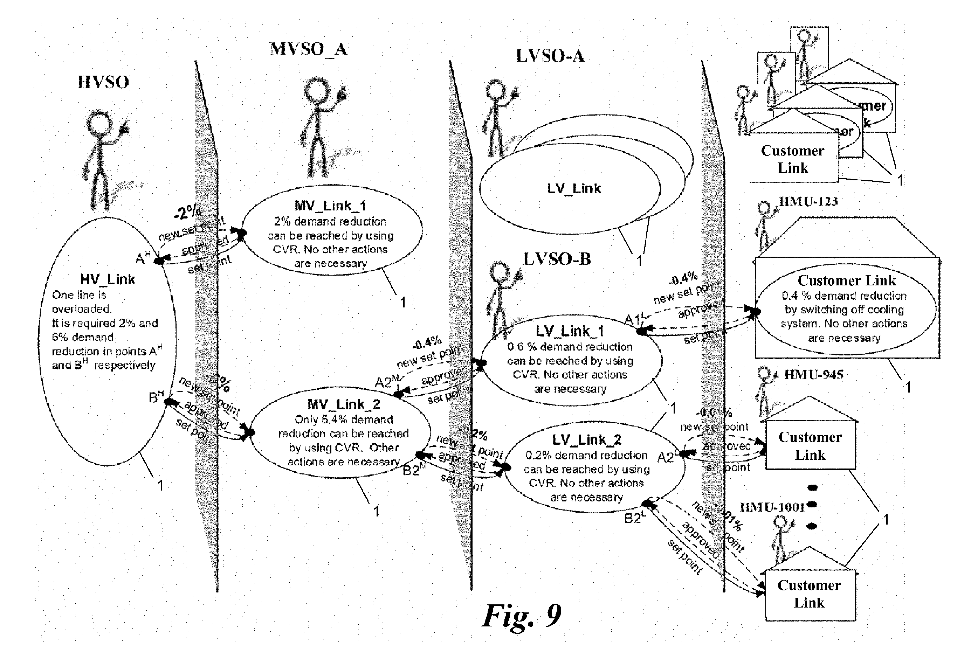

The link described above enables, amongst others, a power grid with links, which can be viewed as black boxes. Thus, there is also provided a method to control such a power grid with black box links. Fig. 9 shows a demand-response use case when an HV-line is overloaded on the basis of the proposed structure of individual links 1 having the interfaces according to Table 1.

In Fig. 9, an HVSO identifies a lightly overloaded line, where in the next hour there is expected an increase of the overload up to 8%. By using the relevant applications, the boundary nodes $A^H$ and $B^H$ are defined on its grid, where the load decrease should be performed with 2% and 6%, respectively. Both links 1 are MV-links and are operated by the same operator MVSO-A. Afterwards, HVSO initiates a demand decrease request for decreasing the demand at this boundary node and proposes two new set points accompanied by the setting and duration time.

After receiving the request for new set points, MVSO-A investigates all possibilities to realize the demand decrease by using its own resources, for example, the Conservation Voltage Reduction, CVR. The 2% reduction of the power that is injected through the boundary node $A^H$ into the MV-link-1, can be realized by performing the CVR. No other actions are needed. The new set point is approved and the HVSO is notified. The reduction desired on the boundary node $B^H$ is bigger than at $A^H$ by about 6%, and only one part of it, about 5.4%, can be reached by performing CVR in MV-link-2. For the rest, about 0.6% demand reduction, other actions are necessary. After investigating his own network and the day-1 schedules, MVSO-A identifies the boundary nodes $A2^M$ and $B2^M$ as the most suitable ones, which should bring a reduction of 0.4% and 0.2%, respectively. LV-link-1 and LV-link-2 are connected to the boundary nodes $A2^M$ and $B2^M$, respectively. Both links 1 are operated by LVSO-B. Afterwards, MVSO-A initiates a demand decrease request for decreasing the demand at these boundary nodes and proposes two new set points, accompanied by the setting and duration time.

After receiving the request for new set points, LVSO-B investigates all possibilities to realize the demand decrease. It cannot perform the CVR in its own link 1, and therefore passes over the request to the prosumers who has a contract for participation in the demand-response process. After the analysis, it results that three boundary nodes are most suitable to realize the demand reduction: $A1^L$ in LV-link-1 and $A2^L$ and $B2^L$ in LV-link2. Consequently, LVSO-B initiates a demand decrease request for decreasing the demand at these boundary nodes and requires 3 new set points, 0.4%, 0.01% and 0.01%, respectively. The request can be accompanied by the setting and duration time of the new set points.

HMU-123 is connected to the boundary node $A1^L$. After receiving the request for a new set point, HMU-123 investigates all possibilities to realize the demand decrease. He approves the new set point and notifies LVSO-B. The same approval and notifying procedure is also used by HMU-945 and HMU-1001. After collecting all replies, LVSO-B approves the new set points for the boundary nodes $A2^M$ and $B2^M$ and notifies MVSO-A.

Having the approvals from the relevant boundary nodes, MVSO-A can fulfil the requirements in the boundary node $B^H$, deductively approve the new set point, and notify the HVSO. HVSO sends the ultimate set points accompanied by the setting and the duration time. MVSO-A makes the ultimate changes on the set point schedules and sends the information to LVSO-B who repeats the same procedure as MVSO-A. The HMUs act similarly.

Thus, by supervising and controlling the fluxes at the boundary nodes with the higher voltage link-grid, the link secondary control enables the cross demand response by all voltage levels up to the native load.

### H.2 Dynamic security

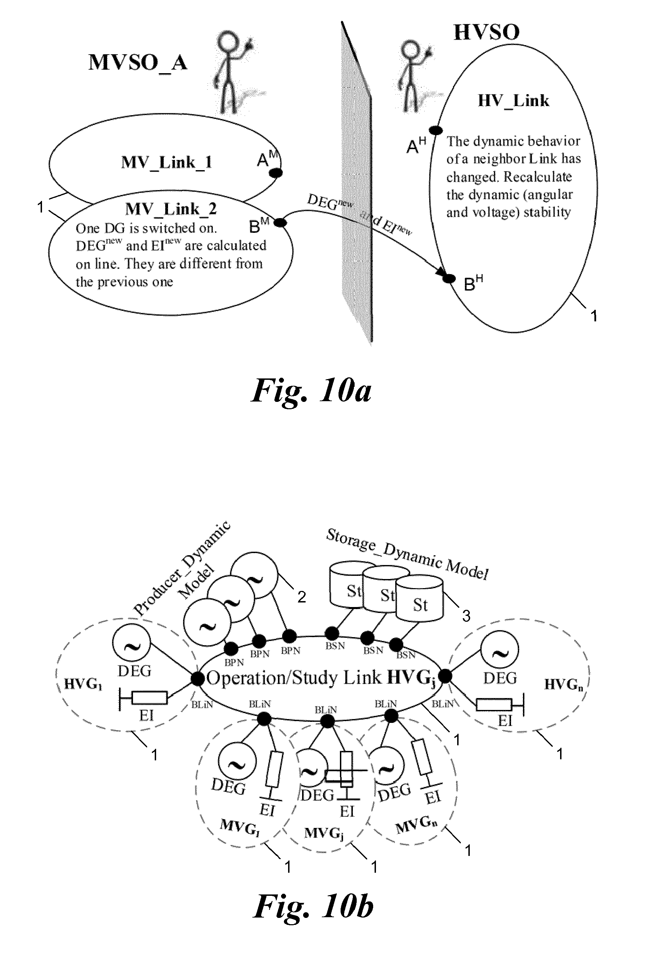

Figs. 10a and 10b show the dynamic security process for the HV-Link when a new DG is switched ON at the grid of the MV-Link 2. Although the DG is not part of the MV-Link 2, it impacts its dynamic behavior. Therefore, the parameters for the dynamic equivalent generator $DEG_{new}$ and the equivalent impedance $EI_{new}$ related to the BM will be calculated online. The new calculated values will be committed to the HV-Link at the BLiN $B^H$ if they are different from the old ones, see Fig 10a. Thus, HV-Link is notified that one of the neighbors has changed the dynamic behavior. For this reason, HV-Link will initiate the calculation of the dynamic stability (angular and voltage) of its own Link with the updated parameters on the calculation model, see Fig. 10b.

**Claims**

1. A method for controlling a power grid with a first link element, the first link element (1) having at least one link node (BLiN) for coupling to at least one second link element (1) similar to the first link element (1) and having at least one of one or more producer nodes (BPN), load nodes (BLoN), and storage nodes (BSN), comprising,
in the first link element (1),
receiving a first demand value at the link node (BLiN);
calculating a set point based on the first demand value for each of said at least one producer nodes (BPN), load nodes (BLoN), and storage nodes (BSN) of the first link element (1);
determining a difference between the first demand value and an actual value which is reached upon applying the set points to said at least one producer nodes (BPN), load nodes (BLoN), and storage nodes (BSN) of the first link element (1);
if the determined difference is above a threshold, sending a percentage of the determined difference as a second demand value to the least one second link element (1).

2. The method of claim 1, wherein said actual value is a calculated value which could be reached if the set points were applied to said at least one producer nodes (BPN), load nodes (BLoN), and storage nodes (BSN) of the first link element (1).

3. The method of claim 2, wherein the set points are applied to the producer nodes (BPN), load nodes (BLoN), and storage nodes (BSN) of the first link element after determining said difference.

4. The method of claim 1, wherein said actual value is a measured value which is reached after the set points have been applied to said at least one producer nodes (BPN), load nodes (BLoN), and storage nodes (BSN) of the first link element (1).

5. The method of any one of the claims 1 to 4, comprising, after determining the difference,
sending a request from the first link element (1) via the link node (BLiN) to at least one second link element (1),
receiving a response value from said second link element (1) via the link node (BLiN), and
calculating said percentage on the basis of said response value.

6. The method of any one of the claims 1 to 5, wherein at least one of the first and second demand values is accompanied by a at least one of a duration and a starting time.

7. The method of any one of the claims 1 to 6, wherein the values exchanged via the link node (BLiN) are at least one of the following: an active power ($P_{meas}$, $P_{set\_point}$, $P_{des}$, $P_{Schedule}$), a reactive power ($Q_{meas}$, $Q_{set\_point}$, $Q_{des}$, $Q_{Schedule}$), a voltage ($V_{meas}$), a power factor ($\delta_{meas}$), a static or dynamic load characteristic ($k_{PV}$, $k_{QV}$, $k_{Pf}$, $k_{Qf}$), an active current ($I_{equiv}$), a reactive current ($Z_{equiv}$), a dynamic equivalent generator parameter ($x_d$, $x_q$, $x_b$, $x'_d$, $x'_q$, $x'_b$, $x''_d$, $x''_q$, $x''_b$, $T'_{d0}$, $T'_{q0}$, $T''_{d0}$, $T''_{q0}$), an equivalent static exciter parameter ($K_A$, $T_A$, $T_R$, $K_S$, $v_{max}$), an equivalent turbine parameter ($K_1$, $T_{G1}$, $R_{MAX}$).

8. The method of any one of the claims 1 to 7, wherein the values exchanged via one of said producer nodes (BPN), load nodes (BLoN), and storage nodes (BSN) are at least one of the following: an active power ($P_{meas}$, $P_{set\_point}$, $P_{des}$, $P_{Schedule}$), a reactive power ($Q_{meas}$, $Q_{set\_point}$, $Q_{des}$, $Q_{Schedule}$), a voltage ($V_{meas}$), a power factor ($\delta_{meas}$), a static or dynamic load characteristic ($k_{PV}$, $k_{QV}$, $k_{Pf}$, $k_{Qf}$).

9. A link element for a power grid, the link element comprising
at least one link node (BLiN) for coupling to at least one further link element (1) similar to the link element (1),
at least one of one or more producer nodes (BPN), load nodes (BLoN), and storage nodes (BSN),
a processor coupled to said nodes (BLiN, BPN, BLoN, BSN) and being configured to receive a first demand value at the link node (BLiN);
calculate a set point based on the first demand value for each of said at least one producer nodes (BPN), load nodes (BLoN), and storage nodes (BSN) of the link element (1);
determine a difference between the first demand value and an actual value which is reached upon applying the set points to said at least one producer nodes (BPN), load nodes (BLoN), and storage nodes (BSN) of the link element (1);
if the determined difference is above a threshold, send a percentage of the determined difference as a second demand value to the least one further link element (1).

10. The link element of claim 9, wherein the processor is further configured to, after determining the difference, send a request from the link element (1) via the link node (BLiN) to at least one further link element (1),
receive a response value from said further link element (1) via the link node (BLiN), and
calculate said percentage on the basis of said response value.

11. The link element of claim 9 or 10, wherein the processor is configured to further send at least one of a duration and a starting time when at least one of the first and second demand values are exchanged.

12. The link element of any one of the claims 9 to 11, wherein the values exchanged via the link node (BLiN) are at least one of the following: an active power ($P_{meas}$, $P_{set\_point}$, $P_{des}$, $P_{Schedule}$), a reactive power ($Q_{meas}$, $Q_{set\_point}$, $Q_{des}$, $Q_{Schedule}$), a voltage ($V_{meas}$), a power factor ($\delta_{meas}$), a static or dynamic load characteristic ($k_{PV}$, $k_{QV}$, $k_{Pf}$, $k_{Qf}$), an active current ($I_{equiv}$), a reactive current ($Z_{equiv}$), a dynamic equivalent generator parameter ($x_d$, $x_q$, $x_b$, $x'_d$, $x'_q$, $x'_b$, $x''_d$, $x''_q$, $x''_b$, $T'_{d0}$, $T'_{q0}$, $T''_{d0}$, $T''_{q0}$), an equivalent static exciter parameter ($K_A$, $T_A$, $T_R$, $K_S$, $v_{max}$), an equivalent turbine parameter ($K_1$, $T_{G1}$, $R_{MAX}$).

13. The link element of any one of the claims 9 to 12, wherein the values exchanged via one of said producer nodes (BPN), load nodes (BLoN), and storage nodes (BSN) are at least one of the following: an active power ($P_{meas}$, $P_{set\_point}$, $P_{des}$, $P_{Schedule}$), a reactive power ($Q_{meas}$, $Q_{set\_point}$, $Q_{des}$, $Q_{Schedule}$), a voltage ($V_{meas}$), a power factor ($\delta_{meas}$), a static or dynamic load characteristic ($k_{PV}$, $k_{QV}$, $k_{Pf}$, $k_{Qf}$).

14. A power grid comprising generators (2), loads (4), and storages (3), and at least two link elements (1) according to claim 7 coupled via their link nodes (BLiN), each link element (1) being coupled via one of its producer nodes (BPN), load nodes (BLoN), and storage nodes (BSN) to one of the generator (2), load (4) and storage (3).

15. The power grid according to claim 14, having at least three link elements (1), wherein
each generator (2), load (4), and storage (3) coupled to the first link element (1) operates on a high voltage level,
each generator (2), load (4) and storage (3) coupled to the second link element (1) operates on a medium voltage level, and
each generator (2), load (4) and storage (3) coupled to the third link element (1) operates on a low voltage level.

**Fig. 1**

*Fig. 2*

**Fig. 3a**

EP 3 035 479 A1

**Fig. 3b**

**Fig. 4a**

**Fig. 4b**

**Fig. 5a**

**Fig. 5b**

**Fig. 6a**

**Fig. 6b**

230 / 400 V
or
110 / 220 V

Load
*Heating*

Injection
*Battery*

BLiN

Secondary
control

CPG

Load
*Air conditioning*

Production
*Photo voltaic*

1

**Fig. 7a**

1

External Neighbor link
**LVG**

$P_{Sched}(j)$

**Black box**

Link (j)
**CPG**

$P_{des}$ $Q_{des}$

2

$P_{des}$ $Q_{des}$

$P_{des}(1)$
$Q_{des}(1)$

$P_{des}(L)$
$Q_{des}(L)$

Load 4

St

3

**Operation/Study**

**Fig. 7b**

*Fig. 8a*

**ISO**

**DSO¹**

MV¹-Link

LV¹-Link

MV¹-Link

LV¹-Link

HV²-Link

1

**MVSO^L**

MV^L-Link

LV^L-Link

MV^L-Link

LV^L-Link

1

1

1

1

1

1

1

*Fig. 8b*

**Fig. 8c**

*Fig. 9*

MVSO_A

HVSO

MV_Link_1          A$^M$

HV_Link

A$^H$ The dynamic behavior
of a neighbor Link has
changed. Recalculate
the dynamic (angular
and voltage) stability

MV_Link_2
One DG is switched on.          B$^M$
DEG$^{new}$ and EI$^{new}$ are calculated
on line. They are different from
the previous one

DEG$^{new}$ and EI$^{new}$

B$^H$

1

1

*Fig. 10a*

Producer_Dynamic_Model

Storage_Dynamic Model

St  St  St

2                                3

HVG$_1$
DEG
EI
BLiN

BPN  BPN  BPN

BSN  BSN  BSN

Operation/Study Link HVG$_j$

BLiN  BLiN  BLiN  BLiN

DEG
EI
HVG$_n$

1                                                                    1

DEG
EI
MVG$_1$

DEG
EI
MVG$_j$

DEG
EI
MVG$_n$

1

1                1                1

*Fig. 10b*

Europäisches
Patentamt

European
Patent Office

Office européen
des brevets

# EUROPEAN SEARCH REPORT

Application Number

EP 14 19 9257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/166524 A1 (SIEMENS AG [DE]) 16 October 2014 (2014-10-16) * the whole document * | 1-15 | INV. H02J3/38 H02J13/00 |
| A | WO 2014/067557 A1 (SIEMENS AG [DE]) 8 May 2014 (2014-05-08) * the whole document * | 1-15 | |
| A,D | A. ILO: "The Energy Supply Chain Net", ENERGY AND POWER ENGINEERING, vol. 5, no. 4, July 2013 (2013-07), pages 384-390, XP002739973, * the whole document * | 1-15 | |
| A,D | A. R. METKE; R. L. EKL: "Security Technology for Smart grid Network", IEEE TRANSACTIONS ON SMART GRID, vol. 1, no. 1, June 2010 (2010-06), pages 99-107, XP002739974, * the whole document * | 1-15 | |

TECHNICAL FIELDS
SEARCHED      (IPC)

H02J

The present search report has been drawn up for all claims

| Place of search | Date of completion of the search | Examiner |
|---|---|---|
| Munich | 10 June 2015 | Annibal, Stewart |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 19 9257

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2015

| Patent document cited in search report | Publication date | Patent family member(s) | Publication date |
|---|---|---|---|
| WO 2014166524 A1 | 16-10-2014 | NONE | |
| WO 2014067557 A1 | 08-05-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012008979 A1

**Non-patent literature cited in the description**

- **P. LUND.** The Danish cell project - Part 1: Background and general approach. *IEEE, Power Engineering Society General Meeting, Tampa, Fl, USA,* 24 June 2007
- **J. TAFT ; P.D. MARTINI.** Ultra Large-Scale Power System Control Architecture; A Strategic Framework for Integrating Advanced Grid Functionality. *Cisco Website,* October 2012
- **K. MOSLEHI ; R. KUMAR.** A Reliability Perspective of the Smart grid. *IEEE transactions on Smart grid,* June 2010, vol. 1 (1), 57-64
- **S. GRIJALVA ; M. U. TARIQ.** Prosumer-based smart grid architecture enables a flat, sustainable electricity industry. *ISGT Conference, Anaheim, CA, USA,* 17 January 2011
- **A. R. METKE ; R. L. EKL.** Security Technology for Smart grid Network. *IEEE transactions on Smart grid,* June 2010, vol. 1 (1), 99-107
- Smart Grid Architecture Model. Smart grid Reference Architecture. CEN-CENELEC-ETSI Smart grid Coordination Group, November 2012
- **A. ILO.** The Energy Supply Chain Net. *Energy and Power Engineering,* July 2013, vol. 5 (4), 384-390